# EUROPÄISCHE PATENTSCHRIFT

(11) **EP 0 690 259 B1**
(45) Veröffentlichungstag und Bekanntmachung des Hinweises auf die Patenterteilung: **16.09.1998**
(21) Anmeldenummer: 95109276.6
(22) Anmeldetag: 15.06.1995
(51) Int. Cl.: F16L 59/02

(54) **Wärmeisolierte Rohranordnung**
Array of thermally insulated pipes
Ensemble de tuyaux isolés thermiquement

(30) Priorität: 30.06.1994 DE 4422860
(43) Veröffentlichungstag der Anmeldung: 03.01.1996
(73) Patentinhaber: Hewing GmbH, D-48607 Ochtrup (DE)
(72) Erfinder: Riesselmann, Franz-Josef, D-49393 Lohne (DE); Claussen, Jörg, D-48153 Münster (DE)
(74) Vertreter: Hilleringmann, Jochen, Dipl.-Ing.

(56) Entgegenhaltungen:
- EP-A- 0 145 371
- DE-A- 2 736 084
- DE-A- 3 203 604
- US-A- 4 231 825

## Beschreibung

Die Erfindung betrifft eine wärmeisolierte Rohranordnung mit mindestens einem Rohr zur direkten oder indirekten Führung eines Fluids und/oder zur Aufnahme von Versorgungsleitungen oder -rohren und einer Wärmeisolierung außerhalb des mindestens einen Rohres.

Wärmeisolierte Rohranordnungen der vorstehenden Art sind beispielsweise aus DE 42 19 305 A1, DE 41 10 124 A1, DE 38 22 714 A1, DE 38 00 646 A1, DE 34 48 295 C2, DE 34 10 838 C2 und EP 0 158 188 B1 bekannt. Die bekannten wärmeisolierten Rohranordnungen werden insbesondere bei der Hausinstallation für Warmwasserleitungen und Heizungsrohre verwendet, die statt in der Wand auf dem Untergrund (Betondecke) verlegt sind. Bei einer solchen Verlegung kommt es insbesondere auf die Wärmeisolation zum Untergrund hin an. Daher sind eine Vielzahl der im Stand der Technik bekannten wärmeisolierten Rohranordnungen mit einer asymmetrischen Isolation, d.h. lediglich mit einer Isolationsschicht zum Untergrund hin versehen. Darüber hinaus gibt es aber auch eine Rundumisolation für Wellrohre, die es erforderlich machen, die zwischen dem rundumisolierten Wellrohr und den anstoßenden (Wärme- oder Trittschall-)Isolierplatten entstehenden Hohlräume mit Perliten und anderen Stoffen auszufüllen. Erst nach der Verfüllung der Hohlräume ist die Verlegung des Estrichs möglich. Dies ist arbeitszeit- und kraftaufwendig.

Bei den bekannten wärmeisolierten Rohranordnungen mit asymmetrischer Isolierung ist die Herstellung dieser Rohranordnungen recht aufwendig. Das fluidführende Rohr oder, wenn ein Leerrohr, beispielsweise ein Wellrohr, verwendet wird, das Leerrohr werden an einer Seite mit einer Wärmeisolationsschicht versehen, um daraufhin die gesamte Einheit aus Rohr und Wärmeisolation zu umhüllen.

Der Erfindung liegt die Aufgabe zugrunde, eine wärmeisolierte Rohranordnung zu schaffen, die sowohl kostengünstig in der Herstellung als auch einfach und bequem ohne nennenswerten Aufwand zu montieren ist.

Zur Lösung dieser Aufgabe wird gemäß mit der Erfindung eine wärmeisolierte Rohranordnung mit den Merkmalen des Anspruchs 1 vorgeschlagen.

Die erfindungsgemäße wärmeisolierte Rohranordnung ist mit einem Wärmeisolations-Streifenmaterial versehen, das eine dem das wärmezuisolierende Rohr aufnehmenden Rohr zugewandte Verbindungsfläche und eine diesem Rohr abgewandte Auflagefläche zur Auflage auf dem Untergrund aufweist. Innerhalb der Verbindungsfläche erfolgt die Verbindung zwischen dem Streifenmaterial und dem Rohr.

Bei der erfindungsgemäßen wärmeisolierten Rohranordnung wird z. B. ein handelsübliches Leerrohr zur Aufnahme eines fluidführenden Innenrohres mit einer Wärmeisolationsschicht insbesondere einseitig verbunden. Einseitig in diesem Zusammenhang bedeutet, daß die Wärmeisolation nicht das gesamte Rohr umschließt, sondern insbesondere lediglich über einen Umfangsabschnitt von maximal 180°, insbesondere 90° bis 180° und vorzugsweise von 120° bis 150° an dem Außenumfang des Rohres anliegt. Die Verbindung von Rohr und Wärmeisolation ist fest und insbesondere nicht selbsttätig lösbar. Diese Verbindung wird vorzugsweise durch Verkleben oder Verschweißen erzielt. Die Wärmeisolationsschicht steht zweckmäßigerweise - in der Draufsicht auf die erfindungsgemäße wärmeisolierte Rohranordnung betrachtet - nicht über das mindestens eine Rohr über bzw. bei Verwendung mehrerer Rohre nicht außen über die beiden außenliegenden der mehreren Rohre. über. Die Seitenkanten der Wärmeisolation gewährleisten die satte Anlage der an die Rohranordnung angrenzenden Isolierplatten für die Trittschall- bzw. Wärmedämmung. Die dem mindestens einen Rohr abgewandte Unterseite der Wärmeisolation weist eine ausreichend breite Auflagefläche zur direkten Auflage der Rohranordnung auf dem Untergrund auf. Damit läßt sich die wärmeisolierte Rohranordnung standfest auf dem Untergrund aufliegend verlegen und, sofern erforderlich, auch noch befestigen.

Zweckmäßigerweise wird die erfindungsgemäße wärmeisolierte Rohranordnung für die Heizkörperanbindung eingesetzt. In diesem Fall ist die Rohranordnung mit einem ersten Rohr für den Zulauf und mit einem zweiten Rohr für den Rücklauf des Heizkörpers versehen. Beide Rohre verlaufen, wie dies bei Verwendung mehrerer Rohre stets vorzugsweise der Fall ist, parallel zueinander und sind jedes für sich fest mit der Wärmeisolationsschicht verbunden. Die Wärmeisolationsschicht dient also sozusagen als Träger für die mehreren Rohre.

Mit der erfindungsgemäßen wärmeisolierten Rohranordnung
- lassen sich die Vorteile des Rohr-in-Rohr-Systems nutzen,
- lassen sich die Nachteile bei der Estrich-Verlegung mindern,
- lassen sich die gesetzlichen Forderungen gemäß Wärmeschutzverordnung erfüllen und
- läßt sich eine einfache und preiswerte Lösung für den Installateur angeben.

Die Herstellung der erfindungsgemäßen Rohranordnung ist denkbar einfach; es müssen lediglich zwei an sich bekannte Produkte zusammengefügt und fest miteinander verbunden werden. Auf Seiten des Installateurs ergibt sich insofern ein einfaches Handling der wärmeisolierten Rohranordnung, als diese, wie ein handelsübliches Rohr, aufgewickelt ist und insofern wie ein handelsübliches Rohr vom Wickel abnehmbar ist. Ferner ist eine standfeste Verlegung der Rohranordnung gegeben. Bei kreuzenden Leitungen und Rohren kann die Wärmeisolation mit dem Messer herausgeschnitten werden. Im übrigen tritt während und nach der Verlegung keine Beschädigung der Wärmeisolation auf der Baustelle auf. Beim späteren Betreiben ist ein Auswechseln des Innenrohres dann möglich, wenn das mit der Wärmeisolation verbundene Rohr als Leerrohr, zweckmäßigerweise in Form eines Kunststoff-Wellrohrs, ausgebildet ist.

In vorteilhafter Weiterbildung ist vorgesehen, daß es sich bei der Wärmeisolation um einen Isolationsschaum aus flexiblem Material, wie z.B. Polyethylen (PE), vernetztes Polyethylen (VPE) oder Polyurethan (PUR) handelt. Das mit dieser Wärmeisolation verbundene mindestens eine Rohr besteht ebenfalls vorzugsweise aus Kunststoff und läßt sich mit der Wärmeisolation durch Verkleben oder Verschweißen fest verbinden.

In vorteilhafter Weiterbildung der Erfindung ist ferner vorgesehen, daß die als Bahnmaterial vorliegende Wärmeisolation in ihrer dem Rohr zugewandten Verbindungsfläche für jedes Rohr eine konkave Vertiefung aufweist, in die das zugeordnete Rohr teilweise eingelegt ist. Die Vertiefung weist eine der Krümmung des Umfangs des Rohres entsprechende Krümmung auf. Ob diese Vertiefung jedoch zuvor in die Wärmeisolation eingebracht ist oder sich bei der Verbindung von Rohr und Wärmeisolation bildet, ist für die Erfindung von untergeordneter Bedeutung. Entscheidend ist, daß zwischen Rohr und Wärmeisolation eine Verbindungsfläche für den festen Verbund zwischen diesen beiden Teilen gegeben ist.

Wie oben bereits angedeutet, läßt sich mit der erfindungsgemäßen Rohranordnung auch eine kreuzende Leitung, beispielsweise eine Elektroleitung überbrücken. Zu diesem Zweck kann entweder aus der Wärmeisolation eine Nut in der Unterseite herausgeschnitten werden (mit einem Messer o.dgl. Werkzeug) oder aber es ist gemäß einer vorteilhaften Weiterbildung der Erfindung vorgesehen, daß in der Unterseite der Wärmeisolation querverlaufende Vertiefungen ausgebildet sind, die der Aufnahme von kreuzenden Leitungen dienen. Allgemeiner ausgedrückt, verbinden die Vertiefungen in der Unterseite zwei Seitenflächen der Wärmeisolation. Die Wärmeisolation selbst weist eine ausreichende Dicke bzw. Höhe auf, um es zu ermöglichen, in der Unterseite Vertiefungen auszubilden oder mit einem Messer diese Vertiefungen im Bedarfsfall durch den Installateur einzuschneiden.

Nachfolgend werden anhand der Figuren zwei Ausführungsbeispiele der Erfindung näher erläutert. Im einzelnen zeigen:
- Fig. 1: eine wärmeisolierte Rohranordnung mit lediglich einem Wellrohr als Leerrohr für ein fluidführendes Innenrohr und
- Fig. 2: ein Ausführungsbeispiel einer wärmeisolierten Rohranordnung mit zwei Wellrohren zur Wärmeisolation des Vor- und Rücklaufs bei der Heizkörperanbindung.

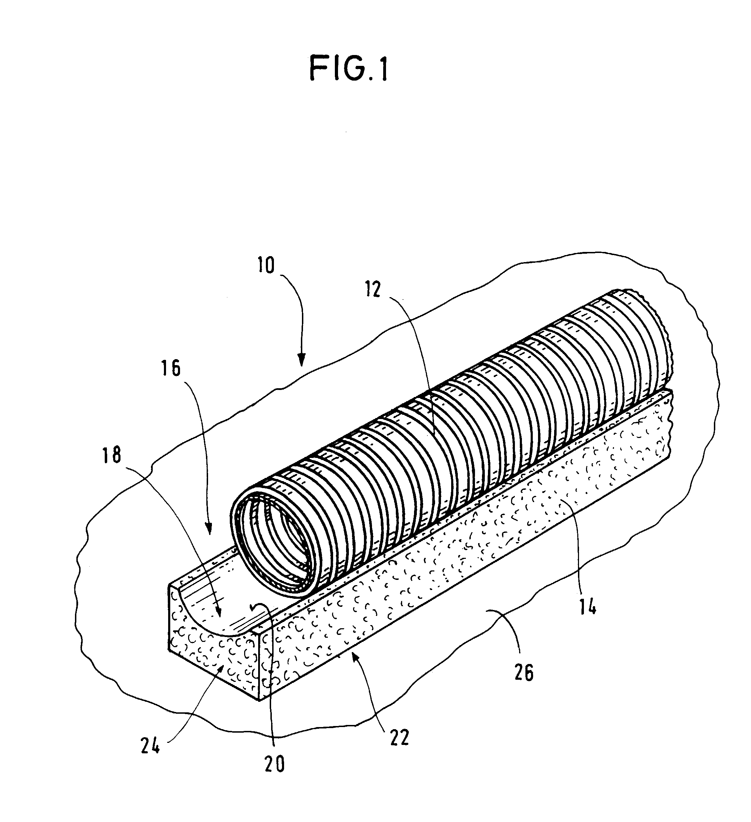

In Fig. 1 ist ein erstes Ausführungsbeispiel einer wärmeisolierten Rohranordnung 10 perspektivisch und teilweise gebrochen dargestellt. Die Rohranordnung 10 besteht aus einem Kunststoff-Wellrohr 12, das als Leerrohr ein fluidführendes Innenrohr, beispielsweise ein Warmwasserrohr, aufnimmt. Unterhalb des Wellrohres 12 befindet sich eine bahn- oder streifenförmige Wärmeisolationsschicht 14 aus einem Isolierschaum aus PE, VPE oder PUR. Die dem Rohr 12 zugewandte Oberseite 16 des Streifens Wärmeisolationsschicht 14 ist muldenförmig ausgebildet und weist eine gekrümmte Vertiefung 18 auf. Die Oberfläche der Vertiefung 18 stellt die Verbindungsfläche 20 zwischen Wärmeisolationsschicht 14 und Wellrohr 12 dar, die durch Verkleben oder Verschweißen fest miteinander verbunden sind. Die dem Wellrohr 12 abgewandte Unterseite 22 der Wärmeisolationsschicht 14 weist eine ebene Auflagefläche 24 auf, über die die Rohranordnung 10 auf einem Untergrund 26 standfest aufliegt.

Die in Fig. 1 dargestellte Rohranordnung wird als Meterware hergestellt und angeliefert, wobei die Rohranordnung 10 wickelfähig ist, d.h. als Coil angeliefert wird. Neben der einfachen Herstellung (das Wellrohr und die Wärmeisolation sind als Elemente an sich bekannt und brauchen lediglich miteinander fest verbunden zu werden) und der einfachen Verlegung durch den Installateur bietet die in Fig. 1 dargestellte Rohranordnung mit Wellrohr 12 als Leerrohr noch den Vorteil des Schutzes des Innenrohres auf der Baustelle vor mechanischen Beschädigungen.

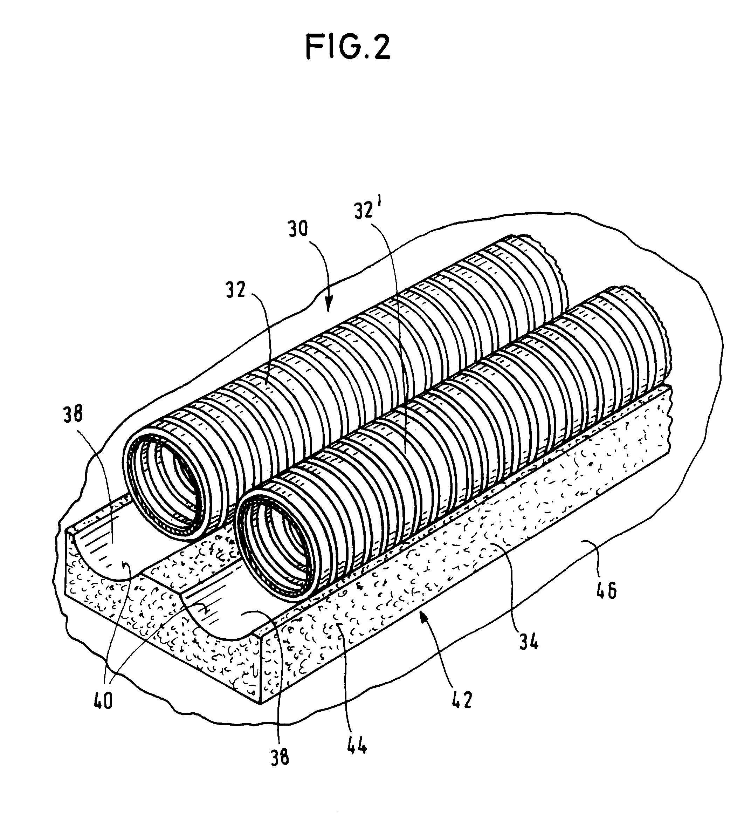

In Fig. 2 ist ein zweites Ausführungsbeispiel einer Rohranordnung 30 dargestellt. Bei diesem zweiten Ausführungsbeispiel weist die Rohranordnung 30 zwei Wellrohre 32,32' auf, die parallel verlaufend nebeneinanderliegend in der Oberseite einer Wärmeisolationsschicht 34 aus PE-, VPE- oder PUR-Schaum liegen. Die beiden Wellrohre 32,32' eignen sich beispielsweise zur Aufnahme der Vorlauf- und der Rücklaufleitungen eines Heizkörpers. Die Oberseite 36 der Wärmeisolationsschicht 34 ist mit zwei zueinander parallel verlaufenden und sich in Wellrohrrichtung erstreckenden Vertiefungen 38,38' versehen, deren Oberflächen 40,40' fest mit der Umfangsfläche der Wellrohre 32,32' über einen Teil von deren Umfangserstreckungen verbunden sind. Die Unterseite 42 der Wärmeisolationsschicht 34 ist wie im Ausführungsbeispiel gemäß Fig. 1 mit einer ebenen Auflagefläche 44 versehen, die auf dem Untergrund 46 aufliegt und der Rohranordnung 30 eine standfeste Auflage auf dem Untergrund 46 gibt.

Wie in den Figuren dargestellt, ragt die Wärmeisolationsschicht 14 bzw. 34 in der Draufsicht gemäß der Doppelpfeile betrachtet, nicht seitlich über die Wellrohre 12 bzw. die Doppelwellrohranordnung 32,32' über. Die Verbindung zwischen der Wärmeisolationsschicht 14 bzw. 34 mit den Wellrohren 12 bzw. 32 und 32' erstreckt sich über weniger als 180° und insbesondere über 90° bis 180°, wobei ein Winkelbereich von 120° bis 150° höchst bevorzugt ist.

Das hier beschriebene Wärmeisolationsrohrprofil gemäß beider Ausführungsbeispiele läßt sich aufwickeln und damit als Meterware bequem lagern und transportieren. Dies ist mit und ohne medienführendes Rohr im Wellrohr möglich. Die Wärmeisolierung ist einfach vom Wellrohr (bzw. medienführenden Rohr in dem Fall, daß dieses ohne Einsatz eines Leerrohres direkt mit der Wärmeisolation verbunden ist) abzulösen, was eine Frage der Haftfestigkeit der Klebe- bzw. Schweißverbindung zwischen Rohr/Leerrohr und Wärmeisolation und der Reißfestigkeit des Materials der Wärmeisolation ist.

## Patentansprüche

1. Wärmeisolierte Rohranordnung mit
- mindestens einem Rohr (12;32,32') zur Aufnahme von Versorgungsleitungen oder -rohren und
- einer an einer Seite und außerhalb des mindestens einen Rohres (12;32,32') angeordneten Wärmeisolierung (14;34), die als Streifenmaterial ausgebildet ist,
**dadurch gekennzeichnet,**
- daß das Streifenmaterial eine mit dem mindestens einen Rohr (12;32,32') verbundene Verbindungsfläche (20;40,40') und eine dem mindestens einen Rohr (12;32,32') abgewandte Auflagefläche (24;44) zur Auflage auf einem Untergrund (26;46) aufweist.

2. Wärmeisolierte Rohranordnung nach Anspruch 1, dadurch gekennzeichnet, daß die dem mindestens einen Rohr (12;32,32') zugewandte Verbindungsfläche (20;40,40') der Außenkontur des mindestens einen Rohres (12;32,32') angepaßt ist.

3. Wärmeisolierte Rohranordnung nach Anspruch 1 oder 2, dadurch gekennzeichnet, daß die dem mindestens einen Rohr (12;32,32') zugewandte Verbindungsfläche (20;40,40') für jedes Rohr eine in Erstreckung des Rohres (12;32,32') verlaufende gekrümmte Vertiefung (18;38,38') aufweist.

4. Wärmeisolierte Rohranordnung nach Anspruch 1, dadurch gekennzeichnet, daß sich das Streifenmaterial über höchstens 180°, insbesondere über 90° bis 180° und vorzugsweise über 120° bis 150° des Umfangs des mindestens einen Rohres (12;32,32') erstreckt.

5. Wärmeisolierte Rohranordnung nach einem der Ansprüche 1 bis 4, dadurch gekennzeichnet, daß die Wärmeisolierung (14;34) mit dem mindestens einen Rohr (12;32,32') lösbar verklebt und/oder verschweißt ist.

6. Wärmeisolierte Rohranordnung nach einem der Ansprüche 1 bis 5, dadurch gekennzeichnet, daß das mindestens eine Rohr (12;32,32') ein Wellrohr ist und zur Aufnahme eines wärmezuisolierenden fluidführenden Innenrohres vorgesehen ist.

7. Wärmeisolierte Rohranordnung nach einem der Ansprüche 1 bis 6, dadurch gekennzeichnet, daß die Wärmeisolierung (14;34) flexibel und/oder elastisch und insbesondere ein PE-, VPE- oder PUR- Schaummaterial ist.

8. Wärmeisolierte Rohranordnung nach einem der Ansprüche 1 bis 7, dadurch gekennzeichnet, daß in der Auflagefläche (24;44) der Wärmeisolierung (14;34) zwei Seiten derselben verbindende zur Auflagefläche (24;44) hin offene Ausnehmungen vorgesehen sind.

9. Verwendung einer wärmeisolierten Rohranordnung nach einem oder mehreren der vorhergehenden Ansprüchen mit zwei Rohren (32,32'), insbesondere Wellrohren, für den Vor- und den Rücklauf eines Heizkörpers.

## Claims

1. A heat insulated pipe arrangement comprising
at least one pipe (12; 32, 32') for receiving supply lines or pipes, and
a heat insulation (14; 34) arranged on one side and outside the at least one pipe (12; 13, 32') and being a web material,
characterized in
that the web material has a connecting surface (20; 40, 40') connected with the at least one pipe (12; 32, 32') and further has a bearing surface (24; 44) for resting on a surface (26; 46).

2. The heat insulated pipe arrangement of claim 1, characterized in that the connecting surface (20; 40, 40') facing towards the at least one pipe (212; 32, 32') is adapted to the outer contour of the at least one pipe (12; 32, 32').

3. The heat insulated pipe arrangement of claim 1 or 2, characterized in that the connecting surface (20; 40, 40') facing towards the at least one pipe (12; 32, 32') has an arcuate indentation (18; 38, 38') for each pipe coextensive with the pipe (12; 32, 32').

4. The heat insulated pipe arrangement of claim 3, characterized in that the strip-shaped material extends over at most 180°, in particular over 90° to 180°, and preferably over 120° to 150° of the circumference of the at least one pipe (12; 32, 32').

5. The heat insulated pipe arrangement of one of claims 1 to 4, charactered in that the heat insulation (14; 34) is releasably adhered and/or welded to the at least one pipe (12; 32, 32').

6. The heat insulated pipe arrangement of one of claims 1 to 5, characterized in that the at least one pipe (12; 32, 32') is a corrugated pipe provided for receiving a fluid-carrying inner pipe to be heat insulated.

7. The heat insulated pipe arrangement of one of claims 1 to 6, characterized in that the heat insulation (14; 34) is flexible and/or elastic and, in particular, is made of a PE, VPE or PUR foamed material.

8. The heat insulated pipe arrangement of one of claims 1 to 7, characterized in that the bearing surface (24; 44) of the heat insulation (14; 34) is provided with recesses connecting two sides surfaces of the insulation and being open towards the bearing surface (24; 44).

9. Use of a heat insulating pipe arrangement of one or a plurality of the preceding claims, comprising two pipes (32, 32'), in particular corrugated pipes, for the forward and the return of a radiator.

## Revendications

1. Tuyauterie isolée à la chaleur comprenant
- au moins un tuyau (12; 32, 32') pour accommoder des conduits ou tuyaux d'alimentation, et
- une isolation thermique (14; 34) sous forme d'un matériau en bande, cette isolation thermique étant prévue sur une côté et au dehors de ledit au moins un tuyau (12; 32, 32'),
caractérisée en ce que
- ledit matériau en bande comprend une surface de jonction (20; 40, 40') raccordée avec ledit au moins un tuyau (12; 32, 32'), et une surface d'appui (24; 44) opposée audit au moins un tuyaux (12; 32, 32') pour s'appuyer sur une surface (26; 46).

2. Tuyauterie isolée à la chaleur selon la revendication 1, caractérisée en ce que la surface de jonction (20; 40, 40') tournée vers ledit au moins un tuyau (12; 32, 32') est adaptée à la surface extérieure du dit au moins un tuyau (12; 32, 32').

3. Tuyauterie isolée à la chaleur selon la revendication 1 ou 2, caractérisée en ce que la surface de jonction (20; 40, 40') tournée vers ledit au moins un tuyau (12; 32, 32') comprend, pour chaque tuyau, une creusement (18 ; 38, 38') en arc,, s'étendant suivant l'extension du dit tuyau (12; 32, 32').

4. Tuyauterie isolée à la chaleur selon la revendication 1, caractérisée en ce que le matériau en bande s'étend autour de la périphérie du dit au moins tuyau (12; 32, 32') pour 180° au maximum, en particulier pour 90° à 180°, et de préférence pour 120° à 150°.

5. Tuyauterie isolée à la chaleur selon une des revendication 1 à 4, caractérisée en ce que l'isolation thermique (14; 34) est détachablement collée et/ou soudée avec ledit au moins un tuyau (12; 32, 32').

6. Tuyauterie isolée à la chaleur selon une des revendication 1 à 5, caractérisée en ce que ledit au moins un tuyau (12; 32, 32') est un tuyau ondulé et qu'il est prévu pour recevoir un tuyau intérieur à isoler thermiquement, conduisant un fluide.

7. Tuyauterie isolée à la chaleur selon une des revendications 1 à 6, caractérisée en ce que l'isolation thermique (14; 34) est flexible et/ou élastique, et qu'il est, en particulier, un matériau alvéolaire PE, VPE ou PUR.

8. Tuyauterie isolée à la chaleur selon une des revendication 1 à 7, caractérisée en ce que des creux sont aménagés dan la surface d'appui (24; 44) de l'isolation thermique (14; 34), les creux raccordant deux faces de l'isolation thermique et étant ouverts vers la surface d'appui (24; 44).

9. Utilisation d'une tuyauterie isolée à la chaleur selon une ou plusieurs revendications, comprenant deux tuyaux, en particulier des tuyaux ondulés (32, 32') pour l'aller et le retour d'un radiateur.
